# EUROPÄISCHE PATENTSCHRIFT

(11) **EP 0 918 589 B1**
(45) Veröffentlichungstag und Bekanntmachung des Hinweises auf die Patenterteilung: **03.05.2000**
(21) Anmeldenummer: 97934503.0
(22) Anmeldetag: 21.07.1997
(51) Int. Cl.: B23D 63/14

(54) **MASCHINE ZUM BEARBEITEN VON WERKSTÜCKEN MIT SCHNEIDZÄHNEN, INSBESONDERE VON SÄGEBLÄTTERN**
MACHINE FOR MACHINING WORKPIECES WITH CUTTING TEETH, IN PARTICULAR SAW BLADES
MACHINE A USINER DES PIECES AVEC DES DENTS DE COUPE, NOTAMMENT DES LAMES DE SCIE

(30) Priorität: 25.07.1996 DE 19630057
(43) Veröffentlichungstag der Anmeldung: 02.06.1999
(73) Patentinhaber: VOLLMER WERKE MASCHINENFABRIK GMBH, D-88400 Biberach (DE)
(72) Erfinder: LENARD, Peter, D-88400 Biberach (DE); BAILER, Norbert, D-88433 Schemmerhofen (DE); SCHMUCKER, Rudi, D-88447 Warthausen (DE)
(74) Vertreter: Goetz, Rupert, Dipl.-Ing.
(86) Internationale Anmeldenummer: EP9703904
(87) Internationale Veröffentlichungsnummer: WO9804379

(56) Entgegenhaltungen:
- DE-A- 3 314 601
- DE-A- 4 316 789
- DE-C- 19 518 710
- FR-A- 2 531 649
- FR-A- 2 531 889
- GB-A- 2 099 338

## Beschreibung

Die Erfindung betrifft eine Maschine zum Bearbeiten von Werkstücken mit Schneidzähnen, insbesondere von Sägeblättern, nach dem Oberbegriff des Anspruchs 1.

Eine solche Maschine ist bekannt aus dem von der Anmelderin im Oktober 1995 veröffentlichten Prospekt "VOLLMER CHD Die Automaten zum Schleifen der kompletten Zahngeometrie hartmetallbestückter Kreissägeblätter in einer Einstellung". Zwar ist diese bekannte Maschine speziell zum Schleifen der Zähne von Kreissägeblättern vorgesehen, doch eignen sich Maschinen mit den Oberbegriffmerkmalen des Anspruchs 1 grundsätzlich auch zum Bearbeiten von Band- und Gattersägeblättern sowie Fräsern und dergleichen, und die Bearbeitung kann auch durch Elektroerosion mittels einer oder mehrerer rotierender Erodierscheiben stattfinden. Dementsprechend ist die vorliegende Erfindung nicht auf das Schleifen der Zähne von Kreissägeblättern beschränkt.

Unabhängig von der allgemeinen Form und vom Verwendungszweck der zu bearbeitenden Werkstücke sind deren Schneidzähne im allgemeinen so hart, daß das bearbeitende, rotationssymmetrische und drehantreibbare Werkzeug, sei es von einer oder mehreren Schleifscheiben oder Erodierscheiben gebildet, möglicherweise schon während der Bearbeitung eines Werkstücks oder sogar eines einzigen Zahns so stark verschleißt, daß Maßänderungen des Werkzeugs bei der weiteren Bearbeitung des Werkstücks berücksichtigt werden müssen. Zu diesem Zweck müssen bisher zeitraubende Messungen am Werkzeug durchgeführt werden. Auch am Werkstück muß vor dessen Bearbeitung meist ein Ausgangsmaß festgestellt werden, um das Werkstück für die Bearbeitung richtig positionieren zu können. Beispielsweise muß bei Kreissägen deren Durchmesser vor der Bearbeitung gemessen werden. Schließlich muß bei Maschinen der genannten Gattung beachtet werden, daß der zur Vorschubeinrichtung gehörige Vorschubfinger durch seine intermittierende Einwirkung auf jeweils einen Schneidzahn allmählich abgeplattet wird, so daß eine Korrektur erforderlich ist, um sicherzustellen, daß sämtliche Schneidzähne mindestens eines und desselben Werkstücks vom Vorschubfinger mit hoher Genauigkeit in die vorgesehene Bearbeitungsstellung geschoben werden. Die vorgesehene Bearbeitungsstellung ist bei einer Maschine der genannten Gattung im allgemeinen diejenige, in der die Spitze des zu bearbeitenden Schneidzahns auf der als Schwenkachse definierten Achse liegt. Unter Zahnspitze ist im allgemeinen, und so auch hier, eine scharfe Kante zu verstehen, die von einer Zahnbrust und einem auch Freifläche genannten Zahnrücken gebildet wird.

Der Erfindung liegt die Aufgabe zugrunde, eine automatische Durchführung der genannten Meß- und Korrekturvorgänge zu ermöglichen.

Die Aufgabe ist erfindungsgemäß mit den Merkmalen des Anspruchs 1 gelöst. Vorteilhafte Weiterbildungen ergeben sich aus den Unteransprüchen.

Ein Ausführungsbeispiel der Erfindung wird im folgenden anhand schematischer Zeichnungen mit weiteren Einzelheiten erläutert. In den Zeichnungen zeigen:

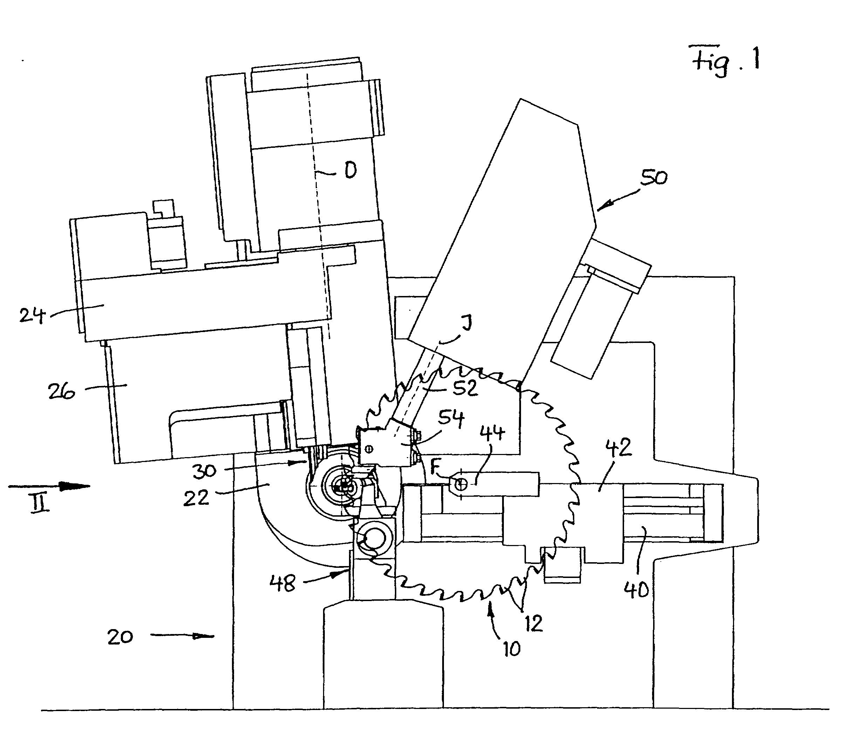

- Fig. 1: die erfindungsgemäße Maschine von vorne,

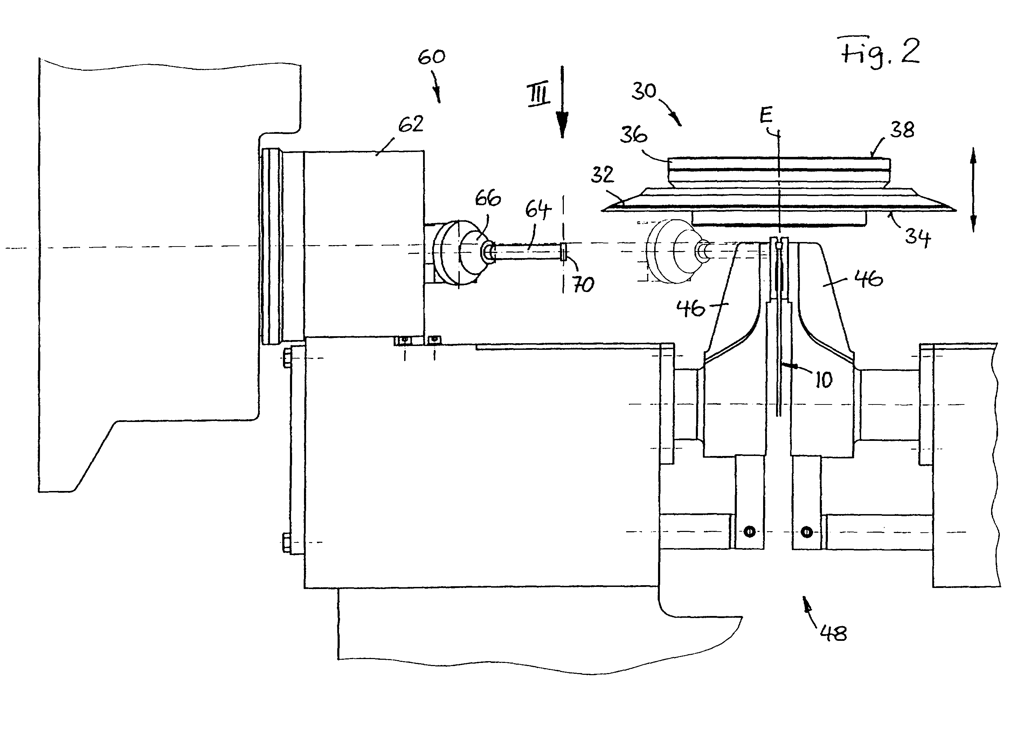

- Fig. 2: eine vergrößerte Teilansicht in Richtung des Pfeils II in Fig. 1,
- Fig. 3: die zugehörige Draufsicht qemäß Pfeil III in Fig. 2.

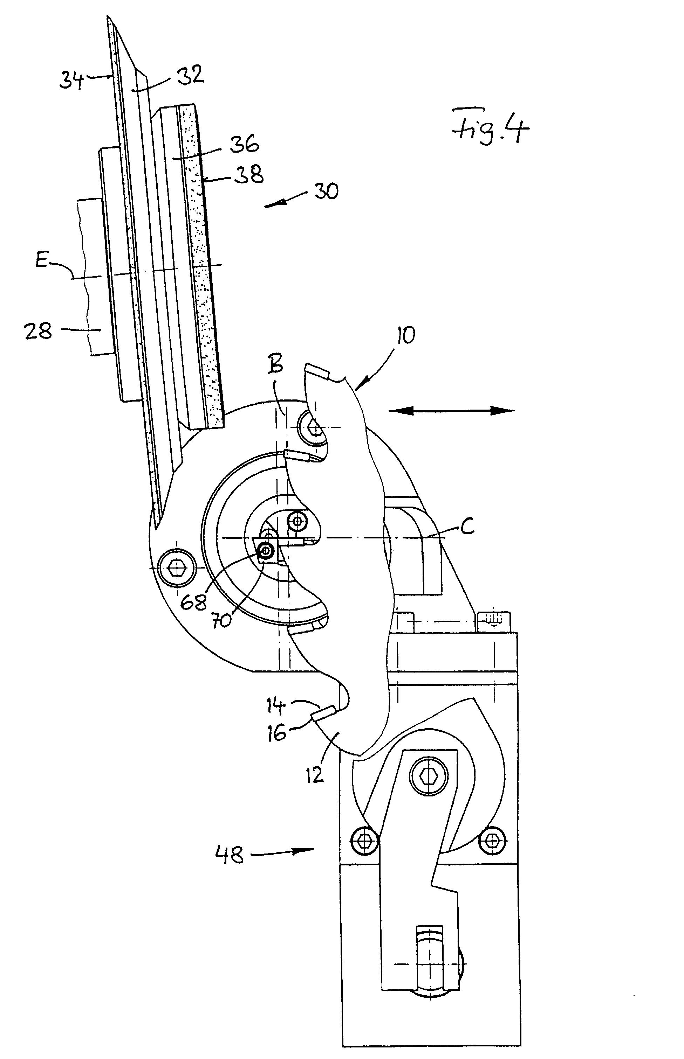

- Fig. 4: einen vergrößerten Ausschnitt aus Fig. 1 in einer ersten Phase eines Betriebszyklus der Maschine,
- Fig. 5 bis 10: entsprechende Ausschnitte in weiteren Phasen eines Betriebszyklus,
- Fig. 11: einen vergrößerten Ausschnitt aus Fig. 3, jedoch bei einer abgewandelten Werkzeugausstattung der Maschine, und
- Fig. 12: einen Ausschnitt ähnlich Fig.7, jedoch bei einer weiter abgewandelten Werkzeugausstattung der Maschine.

Als Beispiel für ein auf der abgebildeten Maschine zu bearbeitendes Werkstück 10 ist eine Kreissäge mit hartmetallbestückten Schneidzähnen 12 dargestellt, von denen jeder an seiner Zahnbrust 14 und an seinem Zahnrücken 16 zu schleifen ist, während seine Zahnspitze 18 eine vorbestimmte Stellung genau einhält.

Die abgebildete Maschine hat ein Maschinengestell 20, an dem ein langgestreckter Schwenkkörper 22 um eine im dargestellten Beispiel waagerechte Schwenkachse A schwenkeinstellbar gelagert ist. Die Schwenkachse A ist definiert als Schnittlinie einer senkrechten ersten Bezugsebene B und einer waagerechten zweiten Bezugsebene C. Längs des Schwenkkörpers 22 erstreckt sich eine Hubachse D, welche die Schwenkachse A unter einem rechten Winkel schneidet und die Bewegungsachse eines Hubschlittens 24 darstellt. Der Hubschlitten ist am Schwenkkörper 22 längs der Hubachse D hin- und herbeweglich geführt und um die Hubachse D schwenkeinstellbar. Längs einer Spindelachse E, welche die Hubachse D rechtwinklig schneidet und sich in der abgebildeten Normalstellung unter einem rechten Winkel zur Schwenkachse A erstreckt, ist am Hubschlitten 24 ein Werkzeugschlitten 26 zustellbar geführt. Die Spindelachse E ist die Achse einer am Werkzeugschlitten 26 gelagerten, drehantreibbaren Werkzeugspindel 28, an der sich ein Werkzeug 30 zum Bearbeiten des Werkstücks 10 befestigen läßt.

Im dargestellten Beispiel ist das Werkzeug 30 eine Schleifscheibenkombination, die sich zusammensetzt aus einer tellerförmigen ersten Schleifscheibe 32 mit einer ebenen ringförmigen ersten Stirnfläche 34 und einer topfförmigen zweiten Schleifscheibe 36 mit einer ebenfalls ebenen, ringförmigen zweiten Stirnfläche 38. Die beiden Schleifscheiben 32 und 36 sind gleichachsig zueinander, Rücken an Rücken, zusammengespannt, so daß die zweite Stirnfläche 38 von der ersten Stirnfläche 34 abgewandt ist. Die erste Schleifscheibe 32 hat einen größeren Durchmesser als die zweite Schleifscheibe 36 und ist dazu vorgesehen, mit der ersten Stirnfläche 34 die Zahnbrust 14 jeweils eines Schneidzahns 12 zu schleifen. Die im Durchmesser kleinere zweite Schleifscheibe 36 ist dazu bestimmt, mit der zweiten Stirnfläche 38 die Zahnrücken 16 zu schleifen. Anstatt der abgebildeten Schleifscheibenkombination kann als Werkzeug 30 auch eine einzelne Schleifscheibe oder Erodierscheibe oder eine Kombination zweier Erodierscheiben vorgesehen sein. Für den Fall, daß unter den zu bearbeitenden Schneidzähnen 12 solche sind, deren Zahnbrust 14 sich nicht, wie dargestellt, parallel zur Schwenkachse A erstreckt, wird der Werkzeugschlitten 26 entsprechend der Schräge der zu bearbeitenden Zahnbrust 14 um die Hubachse D geschwenkt.

An der Vorderseite des Maschinengestells 20 ist eine im dargestellten Beispiel waagerechte Führung 40 angeordnet, die sich unter einem rechten Winkel zur Schwenkachse A erstreckt. Längs der Führung 40 ist ein Werkstückschlitten 42 verschiebbar, der eine Werkstückhalterung 44 trägt. Im dargestellten Beispiel mit einer Kreissäge als Werkstück 10 gehört zur Werkstückhalterung 44 ein Dorn, der eine zur Schwenkachse A parallele Drehachse F für das Werkstück 10 definiert; auf diesen Dorn wird das Werkstück 10 zentrisch aufgesteckt. Der Werkstückschlitten 42 wird so eingestellt, daß der um die Drehachse F geschlagene Kreis, auf dem sämtliche Zahnspitzen 18 des Werkstücks 10 liegen, die Schwenkachse A schneidet. Somit läßt sich das Werkstück 10 schrittweise in Bearbeitungsstellungen drehen, in denen jeweils eine Zahnspitze 18 auf der Schwenkachse A liegt. Die zur Drehachse F normale, im dargestellten Beispiel also senkrechte Mittelebene G des Werkstücks 10 ist so angeordnet, daß sie die Hubachse D enthält. In dieser Stellung wird das Werkstück 10 zwischen zwei Klemmbacken 46 einer Klemmeinrichtung eingespannt. Die Zahnspitze 18 des zu bearbeitenden Schneidzahns 12 ist dabei in einem Punkt H angeordnet, in dem die Schwenkachse A die Mittelebene G durchstößt.

Für die schrittweise stattfindende Vorschubbewegung, im dargestellten Beispiel Drehbewegung, des Werkstücks 10 weist die dargestellte Maschine eine Vorschubeinrichtung 50 mit einer Stange 52 auf, die längs einer Vorschubachse I CNC-gesteuert ausfahrbar ist und an ihrem Ende einen Vorschubkopf 54 trägt.

Am Vorschubkopf 54 ist parallel zur Schwenkachse A ein Querschlitten 56 verschiebbar geführt, der einen Vorschubfinger 58 trägt. Der Querschlitten 56 nimmt normalerweise eine Ruhestellung ein, in welcher der Vorschubfinger 58 abseits der Mittelebene G angeordnet ist; nur wenn eine Vorschubbewegung auszuführen ist, wird der Querschlitten 56 parallel zur Schwenkachse A in eine Stellung bewegt, in welcher der Vorschubfinger 58 in die Zahnlücke vor dem nächsten zu bearbeitenden Schneidzahn 12 eintaucht und sodann durch Ausfahren der Stange 52 gegen die Zahnbrust 14 dieses Zahns drückt und sie in die beschriebene Stellung schiebt, in der die Zahnspitze 18 mit dem Punkt H übereinstimmt. Es ist ersichtlich, daß die Vorschubachse I nur näherungsweise an die Bewegungsbahn der Zahnbrust 14 angepaßt werden kann, die vom Vorschubfinger 58 vorgeschoben wird. Zwischen dieser Zahnbrust 14 und dem Vorschubfinger 58 findet somit eine Relativbewegung statt, die einen Verschleiß am Vorschubfinger 58 bewirkt. Infolge dieses Verschleisses, wenn er nicht kompensiert wird, erreicht die Zahnspitze 18 den Punkt H nicht ganz, und dies wiederum hat zur Folge, daß die Zahnbrust 14 und der Zahnrücken 16 nicht mit der gewünschten Genauigkeit geschliffen werden können.

Soweit bisher beschrieben, ist die dargestellte Maschine von bekannter Bauart, beispielsweise gemäß dem eingangs genannten Prospekt der Anmelderin. Dazu gehört, daß die Maschine eine nicht dargestellte bekannte numerische Steuerung aufweist, mit der sämtliche erwähnten Bewegungen nach einem Programm steuerbar sind.

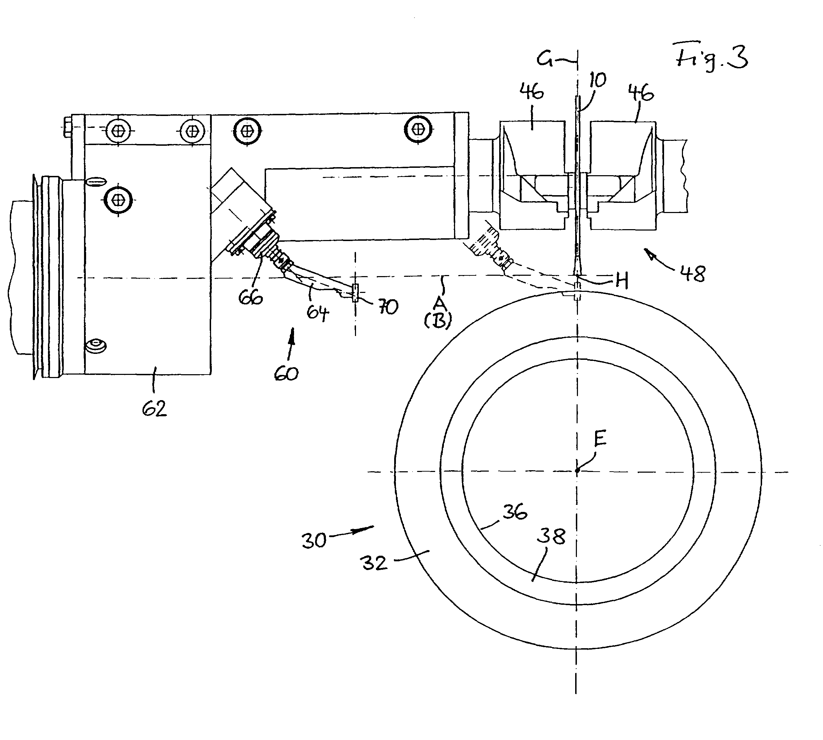

Die zum Erzielen der gewünschten Geometrie der Schneidzähne 12 wichtigsten Daten des Werkstücks 10, des Werkzeugs 30 und der Vorschubeinrichtung 50 lassen sich an der dargestellten Maschine mit einer Meßeinrichtung 60 ermitteln, die an die erwähnte Steuerung angeschlossen ist. Zur Meßeinrichtung 60 gehört ein Meßschlitten 62, der längs der Schwenkachse A aus der in Fig. 3 mit vollen Linien gezeichneten Ruhestellung in die mit gestrichelten Linien angedeutete Meßstellung verschiebbar ist. Am Meßschlitten 62 ist ein Meßtaster 64 mittels eines Gelenks 66 in der Art eines Kugelgelenks derart gelagert, daß er um dieses Gelenk nach allen Seiten pendelnd ausgelenkt werden kann, wobei er Signale entsprechend der Richtung seiner Auslenkung an die Steuereinrichtung abgibt. Am Ende des Meßtasters 64 ist mit einem einfachen Befestigungsmittel 68, als Beispiel dargestellt ist eine Innensechskantschraube, ein Tastkörper 70 leicht auswechselbar, jedoch in genau reproduzierbarer Lagezuordnung zum Meßtaster 64, befestigt.

Der Tastkörper 70 besteht aus einem besonders harten Material wie Hartmetall oder polykristallinem Diamant, so daß er wenig verschleißanfällig ist. Er kann durch ein Abrichtwerkzeug für handelsübliche Erodierscheiben ersetzt werden, wenn solche als Werkzeug 30 verwendet werden. Am Tastkörper 70 sind vier Tastflächen ausgebildet, nämlich eine erste Tastfläche 72, die in einem kleinen Abstand parallel zur ersten Bezugsebene B, also senkrecht, angeordnet ist, eine zweite Tastfläche 74, die in der zweiten Bezugsebene C liegt, also mit der ersten Tastfläche 72 einen rechten Winkel einschließt, eine dritte Tastfläche 76, die mit der zweiten Tastfläche 74 einen Winkel von im dargestellten Beispiel 75° einschließt und sich wie die erste und die zweite Tastfläche parallel zur Schwenkachse A erstreckt, sowie eine vierte Tastfläche 78, die eine freie Stirnfläche des Tastkörpers 70 bildet und sich normal zur Schwenkachse A, und somit auch rechtwinklig zur ersten bis dritten Tastfläche, erstreckt.

Im folgenden werden mehrere Möglichkeiten beschrieben, die Meßeinrichtung 60 zu benutzen:

In vielen Fällen kann nicht vorausgesetzt werden, daß alle relevanten Daten des zu bearbeitenden Werkstücks 10 von vorneherein bekannt sind. Wenn das Werkstück 10 beispielsweise, wie dargestellt, eine Kreissäge ist, und wenn diese gebraucht und schon mindestens einmal nachgeschärft worden ist, dann muß ihr Durchmesser gemessen werden, ehe sie auf der dargestellten Maschine mit wünschenswerter Genauigkeit erneut nachgeschärft werden kann. Zu diesem Zweck wird das Werkstück 10 auf die Werkstückhalterung 40 aufgesteckt, während der Werkstückschlitten 42 seine von der Schwenkachse A entfernte Endstellung einnimmt. Sodann wird der Werkstückschlitten 42 numerisch gesteuert längs seiner Führung 40 vorgeschoben, bis eine Zahnspitze 18 in die Nähe des Punktes H gelangt ist. Sodann wird die Vorschubeinrichtung 50 einmal betätigt, wobei ihr Vorschubfinger 58 die von der genannten Zahnspitze 18 ausgehende Zahnbrust 14 in eine Stellung schiebt, in der diese Zahnspitze einigermaßen genau in der waagerechten zweiten Bezugsebene C liegt. Dieser Vorgang des vorläufigen Positionierens kann entfallen, wenn auf andere Weise für eine entsprechende Vorpositionierung gesorgt worden ist, beispielsweise durch manuelles Anlegen der genannten Zahnbrust 14 an einen Anschlag oder durch Verwendung eines Roboters, der das Werkstück 10 der abgebildeten Maschine vorpositioniert zuführt.

Anschließend wird der Meßschlitten 62 ausgefahren, so daß der Tastkörper 70 seine Meßstellung in der Mittelebene G einnimmt, und dann wird der Werkstückschlitten 42 im Schleichgang weiter vorwärts bewegt, bis die genannte Zahnspitze 14 gegen die senkrechte erste Tastfläche 72 des Tastkörpers 70 stößt. Sobald dies geschehen ist, gibt die Meßeinrichtung 60 ein Signal ab, aufgrund dessen die Steuereinrichtung den Durchmesser des im dargestellten Beispiel als Werkstück 10 eingesetzten Sägeblattes errechnen kann, da ihr die Position des Werkstückschlittens 42, und somit auch der Drehachse F, bekannt ist. Die Kenntnis des Durchmessers ermöglicht in vielen Fällen, bei geeigneter Typisierung, eindeutige Rückschlüsse auf weitere Daten des Werkstücks 10, beispielsweise seiner Zahnteilung. Der Meßschlitten 62 kehrt nun in seine Ruhestellung zurück.

Um das Werkstück 10 endgültig zu positionieren, wird der Werkstückschlitten 42 schließlich um eine Strecke zurückbewegt, die mit dem vorbekannten Abstand der ersten Tastfläche 72 des nicht ausgelenkten Tastkörpers 70 von der senkrechten ersten Bezugsebene B übereinstimmt. Die Zahnbrust 14 des ersten zu bearbeitenden Schneidzahns 12 steht dann im Punkt H auf der Schwenkachse A. In dieser Stellung wird die Klemmeinrichtung 48 geschlossen, so daß das Werkstück 10 sich nicht mehr unbeabsichtigt bewegen kann. Anschließend wird der positionierte Schneidzahn 12 vom Werkzeug 30 geschliffen, beispielsweise zunächst von der ersten Stirnfläche 34 an der Zahnbrust 14 und später von der zweiten Stirnfläche 38 am Zahnrücken 16.

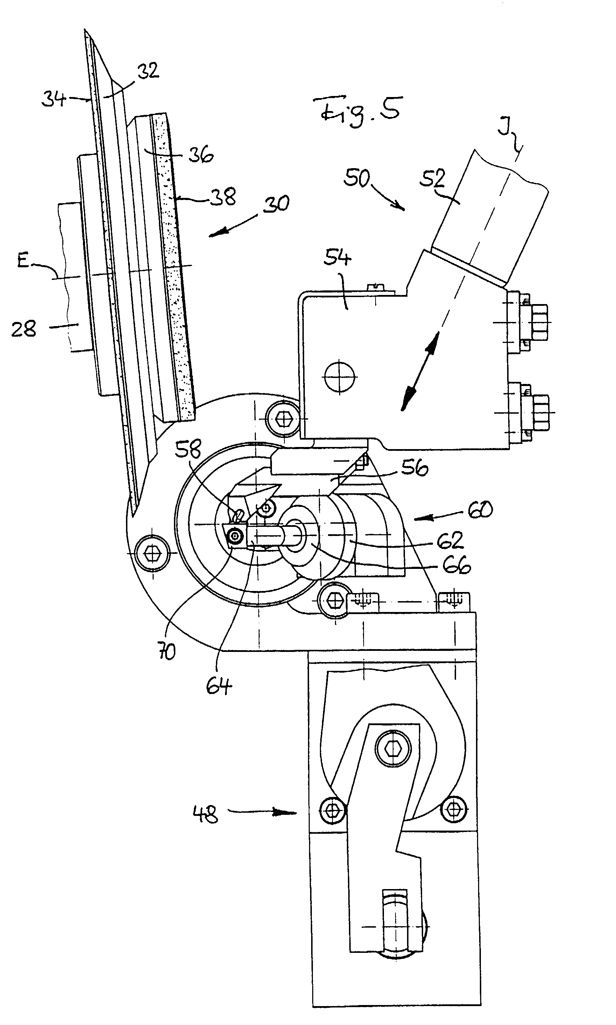

Wenn nach der Bearbeitung einer mehr oder weniger großen Anzahl Schneidzähne 12 damit zu rechnen ist, daß der Vorschubfinger 58 einen Verschleiß erlitten hat, der beginnen könnte, die Genauigkeit der Positionierung der einzelnen Schneidzähne 12 zu beeinträchtigen, dann ist es Zeit, die Vorschubeinrichtung 50 nachzumessen. Deshalb wird nach der Bearbeitung einer vorbestimmten Anzahl Schneidzähne 12 der Meßschlitten 62 automatisch in seine Meßstellung gebracht und die Vorschubeinrichtung 50 wird ausgefahren, so daß der Vorschubfinger 58 gemäß Fig. 5 gegen die waagerechte zweite Tastfläche 74 des Tastkörpers 70 stößt, wobei die Meßeinrichtung 60 ein Signal an die Steuerung abgibt. Diese bewirkt nun eine Stellungskorrektur der Vorschubeinrichtung 50, wodurch der am Vorschubfinger 58 eingetretene Verschleiß kompensiert wird. Daraufhin kehrt der Meßschlitten 62 in seine Ruhestellung zurück und die Bearbeitung des Werkstücks 10 kann fortgesetzt werden.

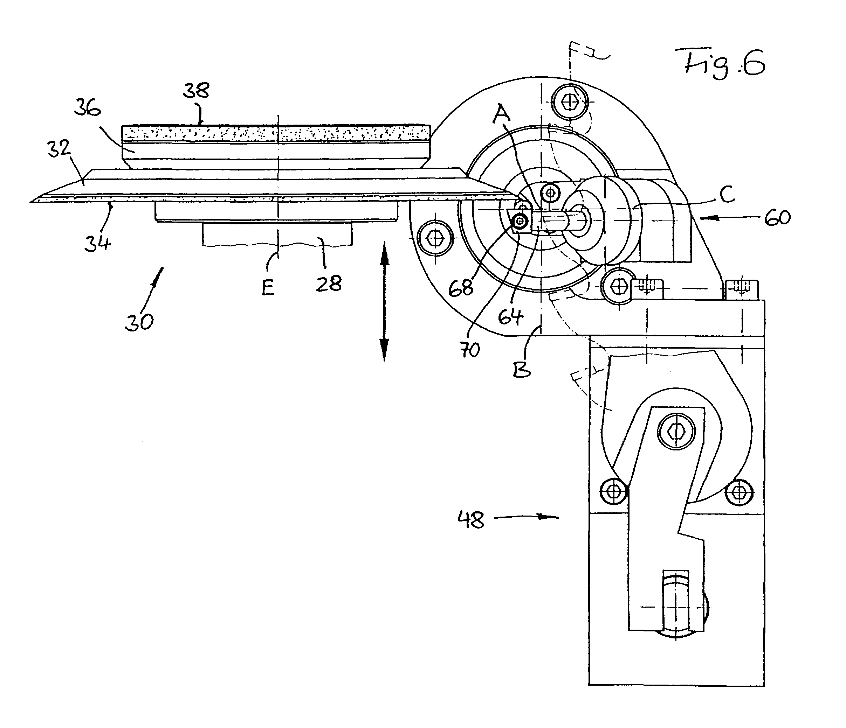

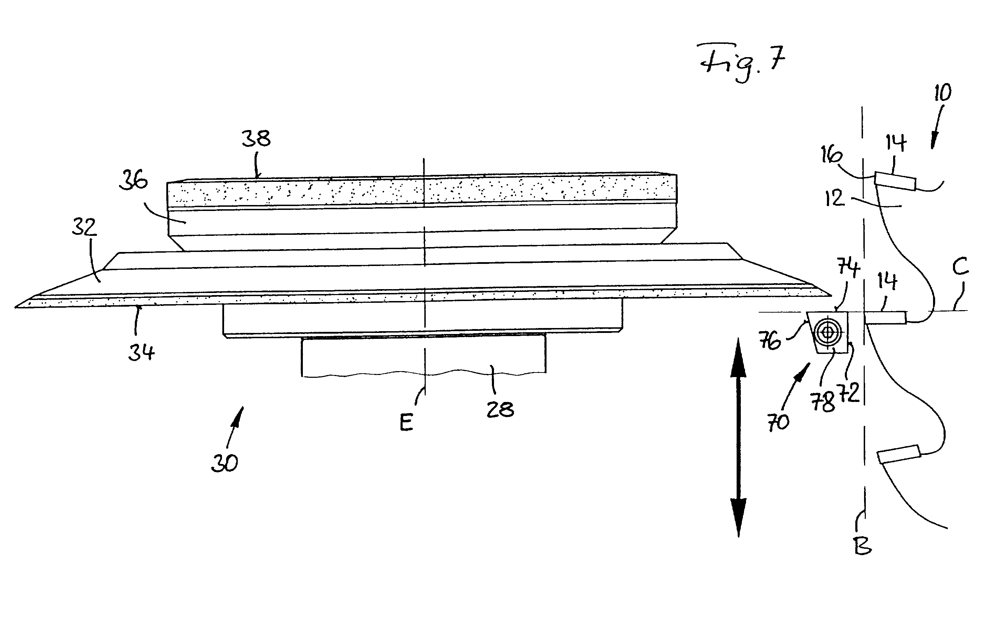

Auch am Werkzeug 30 werden verschleißbedingte Veränderungen in vorgegebenen Intervallen gemessen und kompensiert. Bezüglich der ersten Stirnfläche 34 geschieht dies gemäß Fig. 6 und 7, indem der Hubschlitten 24 programmgesteuert in eine Schwenkstellung gebracht wird, in der diese Stirnfläche 34 waagerecht, also parallel zur zweiten Tastfläche 74 des Tastkörpers 70 angeordnet ist. Sodann wird der Werkzeugschlitten 26 soweit zugestellt, bis die erste Stirnfläche 34 des Werkzeugs 30 die zweite Tastfläche 74 des Tastkörpers 70 berührt und dadurch ein Signal der Meßeinrichtung 60 auslöst, das die erforderliche Korrektur der Stellung bewirkt, die der Werkzeugschlitten 26 beim Schleifen der nächsten Zahnbrust 14 einnimmt.

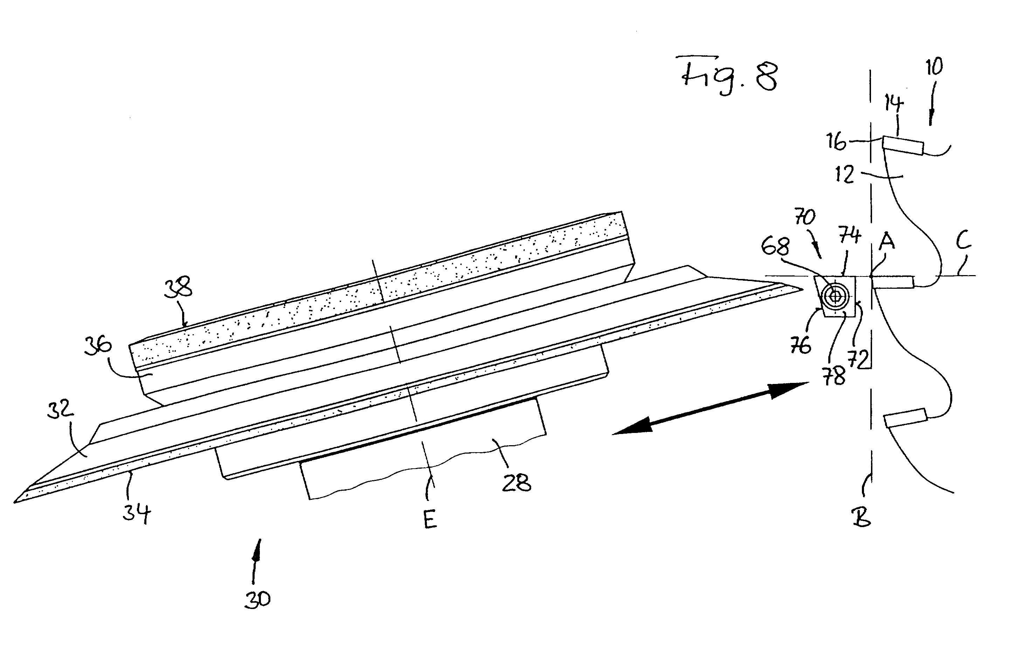

Da auch der wirksame Durchmesser der tellerförmigen Schleifscheibe 32 durch Verschleiß abnimmt, kann auch er in vorbestimmten Intervallen automatisch gemessen werden, indem der Schwenkkörper 22 in eine Stellung gebracht wird, in der sich die erste Stirnfläche 34 des Werkzeugs 30 normal zur dritten Tastfläche 76 des Tastkörpers erstreckt. Sodann wird die Werkzeugspindel 28 mittels eines dem Werkzeugschlitten 26 in üblicher Weise zugeordneten Querschlittens im Sinne des Doppelpfeils in Fig. 8 quer zur Spindelachse E zugestellt, bis der äußere Rand der ersten Schleifscheibe 32 gegen die dritte Tastfläche 76 des Tastkörpers 70 stößt, wodurch wiederum ein Korrektursignal ausgelöst wird.

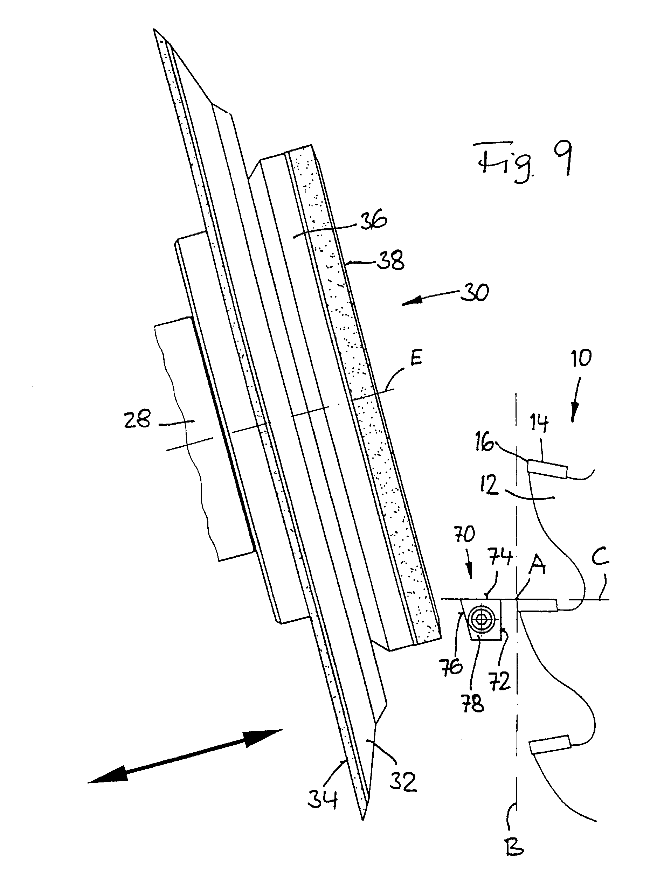

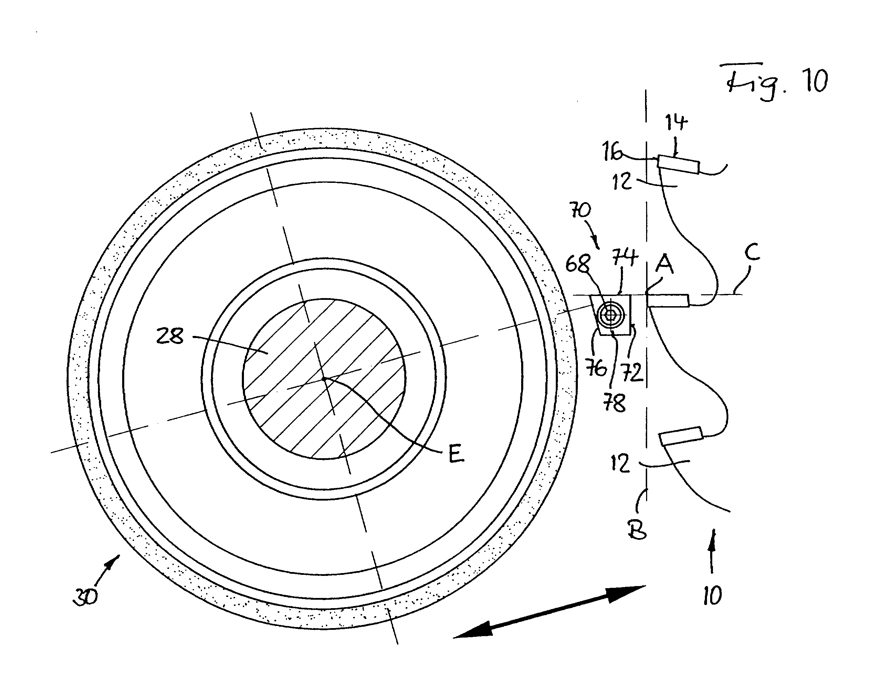

In entsprechender Weise lassen sich gemäß Fig. 9 und 10 die Lage der zweiten Stirnfläche 38 bzw. der Durchmesser der zweiten Schleifscheibe 36 bestimmen und entsprechende Korrekturen durchführen.

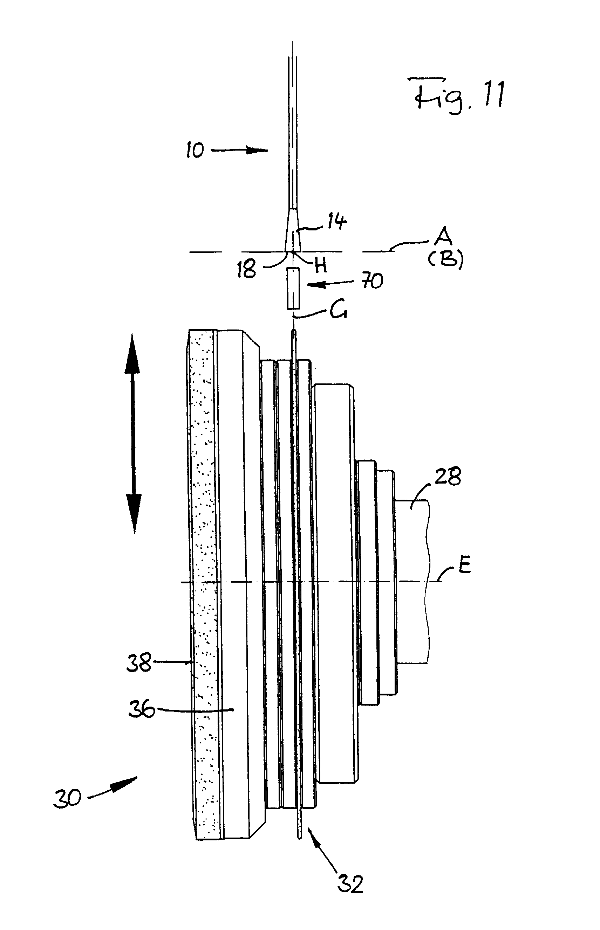

Gemäß Fig. 11 hat das Werkzeug 30 neben seiner unveränderten topfförmigen zweiten Schleifscheibe 36 eine kleinere und dünne erste Schleifscheibe 32, die dazu bestimmt ist, in jeden Schneidzahn 12, ausgehend von seinem Zahnrücken 16, eine in der Mittelebene G liegende Spanbrechernut einzuarbeiten. Der Durchmesser dieser abgewandelten ersten Schleifscheibe 32 nimmt verschleißbedingt verhältnismäßig schnell ab und muß deshalb in entsprechend kurzen vorgegebenen Intervallen gemessen werden. Dies geschieht gemäß Fig. 11, und auch daran schließt sich eine entsprechende Kompensation an.

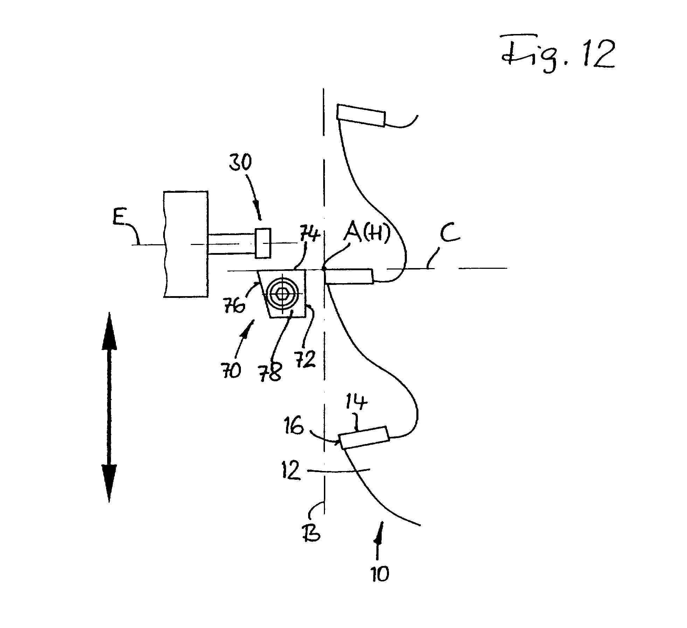

Schließlich gibt es Schneidzähne 12, deren Zahnbrust 14 mit einem Hohlschliff versehen wird; dies geschieht mit dem in Fig. 12 dargestellten abgewandelten Werkzeug 30, das ein walzenförmiges Schleifwerkzeug sehr kleinen Durchmessers sein kann. Auch dieses Werkzeug 30 wird als Voraussetzung für eine entsprechende Stellungskorrektur in vorgegebenen Intervallen nachgemessen; dies geschieht gemäß Fig. 12, indem das Werkzeug 30 mit seiner Umfangsfläche an die zweite Tastfläche 74 des Tastkörpers 70 angelegt und dadurch ein entsprechendes Korrektursignal ausgelöst wird.

## Patentansprüche

1. Maschine zum Bearbeiten von Werkstücken (10) mit Schneidzähnen (12), insbesondere von Sägeblättern, mit
- einem Maschinengestell (20) an dem eine Schwenkachse (A) festgelegt ist, in der sich eine erste und eine zweite Bezugsebene (B,C) schneiden,
- einem Schwenkkörper (22), der um die Schwenkachse (A) schwenkbar ist und eine zu dieser querverlaufende Hubachse (D) definiert,
- einem Hubschlitten (24), der am Schwenkkörper (22) längs der Hubachse (D) verschiebbar geführt ist,
- einem Werkzeugschlitten (26), der eine zur Hubachse (D) querverlaufende Spindelachse (E) definiert und längs dieser zustellbar am Hubschlitten (24) geführt ist,
- einer Werkzeugspindel (28), die am Werkzeugschlitten (26) um die Spindelachse (E) drehantreibbar gelagert und mit einem rotationssymmetrischen Werkzeug (30) bestückbar ist,
- einem Werkstückschlitten (42), der am Maschinengestell (20) quer zur ersten Bezugsebene (B) verschiebbar geführt ist und mit einer an ihm ausgebildeten Werkstückhalterung (44) eine zur Schwenkachse (A) normale Mittelebene (G) definiert,
- einer Vorschubeinrichtung (50) mit einem Vorschubfinger (58), der intermittierend an jeweils einen Schneidzahn (12) eines in der Werkstückhalterung (44) aufgenommenen Werkstücks (10) anlegbar ist, um dieses vorzuschieben, und
- einer Steuerung für Bewegungen des Werkzeugschlittens (26), des Werkstückschlittens (42) und des Vorschubfingers (58), dadurch gekennzeichnet, daß
- zum Ermitteln des Abstandes der Schneidzähne (12) des Werkstücks (10) von der Werkstückhalterung (44) sowie zum Ermitteln mindestens einer den Abnutzungszustand des Werkzeugs (30) oder des Vorschubfingers (58) wiedergebenden Meßgröße ein gemeinsamer Tastkörper (70) vorgesehen ist, der aus einer zurückgezogenen Ruhestellung in eine Meßstellung in der Nähe des Punktes (H) bewegbar ist, in dem die Schwenkachse (A) die Mittelebene (G) durchdringt, und
- die Steuerung dazu eingerichtet ist, die ermittelten Meßgrößen in Signale zum Steuern des Werkstückschlittens (42) sowie des Werkzeugschlittens (26) und/oder der Vorschubeinrichtung (50) umzusetzen.

2. Maschine nach Anspruch 1,
dadurch gekennzeichnet, daß der Tastkörper (70) eine erste und eine zweite Tastfläche (72,74) aufweist, die zur ersten bzw. zweiten Bezugsebene (B bzw. C) parallel sind, und von denen die erste Tastfläche (72) zum Messen des Abstandes der Schneidzähne (12) von der Werkstückhalterung (44) vorgesehen ist, während die zweite Tastfläche (74) zum Messen eines Dickenmaßes des Vorschubfingers (58) und/oder des Werkzeugs (30) vorgesehen ist.

3. Maschine nach Anspruch 2,
dadurch gekennzeichnet, daß die erste und zweite Tastfläche (72,74) einen rechten Winkel miteinander einschließen.

4. Maschine nach Anspruch 2 oder 3,
dadurch gekennzeichnet, daß der Tastkörper (70) eine dritte Tastfläche (76) aufweist, die mit der zweiten Tastfläche (74) einen spitzen Winkel einschließt und zum Messen eines weiteren Dickenmaßes und/oder mindestens eines Radius des Werkzeugs (30) vorgesehen ist.

5. Maschine nach Anspruch 4,
dadurch gekennzeichnet, daß der Tastkörper (70) eine vierte Tastfläche (78) aufweist, die rechtwinklig zur ersten bis dritten Tastfläche (72,74,76) angeordnet ist.

6. Maschine nach einem der Ansprüche 1 bis 5,
dadurch gekennzeichnet, daß der Tastkörper (70) auch zum Abrichten des Werkzeugs (30) ausgebildet ist.

## Claims

1. A machine for machining workpieces (10) which have cutting teeth (12), especially saw blades, comprising
- a machine bed (20) on which a pivot axis (A) is fixed, first and second reference planes (B, C) intersecting on said pivot axis,
- a pivot body (22) which is adapted to swing about the pivot axis (A) and defines a lift axis (D) extending transversely of the pivot axis,
- a reciprocating slide (24) which is guided on the pivot body (22) for reciprocating along the lift axis (D),
- a saddle (26) which defines a spindle axis (E) extending transversely of the lift axis (D) and is guided on the reciprocating slide (24) for infeeding motion,
- a tool spindle (28) which is supported on the saddle (26) so as to be driven in rotation about the spindle axis (E) and is adapted to receive a rotationally symmetric tool (30),
- a workpiece slide (42) which is guided on the machine bed (20) for traversing transversely of the first reference plane (B) and which defines a central plane (G), at right angles to the pivot axis (A), together with a workpiece support (44) formed integrally with the workpiece slide (42),
- an advance means (50) including an advance finger (58) adapted for intermittent engagement with a respective cutting tooth (12) of a workpiece (10) retained on the workpiece support (44) so as to advance the same, and
- a means for control of movements of the saddle (26), the workpiece slide (42), and the advance finger (58),
**characterized in that**
- a common feeler (70) is provided to determine the distance of the cutting teeth (12) of the workpiece (10) from the workpiece support (44) and also to determine at least one measurable variable which reflects the condition of wear of the tool (30) or of the advance finger (58), said feeler (70) being movable from a retracted, inactive position into a measuring position in the vicinity of point (H) at which the pivot axis (A) passes through the central plane (G), and
- the control means is designed to convert the measured data into signals for controlling the workpiece slide (42) and the saddle (26) and/or the advance means (50).

2. The machine as claimed in claim 1, characterized in that the feeler (70) has first and second sensing surfaces (72, 74) which are parallel to the first and second reference planes (B and C, respectively), the first sensing surface (72) serving to measure the distance of the cutting teeth (12) from the workpiece support (44), while the second sensing surface (74) serves to measure a thickness dimension of the advance finger (58) and/or the tool (30).

3. The machine as claimed in claim 2, characterized in that the first and second sensing surfaces (72, 74) together form a right angle.

4. The machine as claimed in claim 2 or 3, characterized in that the feeler (70) has a third sensing surface (76) which forms an acute angle with the second sensing surface (74) and serves to measure another thickness dimension and/or at least a radius of the tool (30).

5. The machine as claimed in claim 4, characterized in that the feeler (70) has a fourth sensing surface (78) at right angles with respect to the first to the third sensing surfaces (72, 74, 76).

6. The machine as claimed in claims 1 to 5, characterized in that the feeler (70) is designed also for adjusting the tool (30).

## Revendications

1. Machine pour l'usinage de pièces (10) avec des dents de coupe (12), en particulier des lames de scie, comprenant :
- un châssis de machine (20), sur lequel est fixé un axe de pivotement (A) auquel se recoupent un premier et un deuxième plan de référence (B, C),
- un corps pivotant (22), capable de pivoter autour de l'axe de pivotement (A), et définissant un axe de levage (D) perpendiculaire à celui-ci,
- un chariot de levage (24), guidé en déplacement sur le corps pivotant (22) en déplacement le long de l'axe de levage (D),
- un chariot à outil (26), lequel définit un axe de broche (E) perpendiculaire à l'axe de levage (D), et guidé en rapprochement le long de cet axe sur le chariot de levage (24),
- une broche à outil (28), montée sur le chariot à outil (26) avec faculté d'entraînement autour de l'axe (E) de la broche, et susceptible d'être équipée d'un outil (30) à symétrie de révolution,
- un chariot à pièce (42), guidé sur le châssis de machine (20) en déplacement perpendiculairement au premier plan de référence (B), et définissant un plan médian (G) perpendiculaire à l'axe de pivotement (A) au moyen d'un porte-pièce (44) réalisé sur lui-même,
- un dispositif d'avance (50) avec un doigt d'avance (58), lequel peut être appliqué par intermittence sur une dent de coupe respective (12) d'une pièce (10) reçue dans le porte-pièce (44), afin de faire avancer ladite pièce, et
- une commande pour les déplacements du chariot à outil (26), du chariot à pièce (42), et du doigt d'avance (58),
caractérisée en ce que
- pour déterminer la distance des dents de coupe (12) de la pièce (10) vis-à-vis du porte-pièce (44), ainsi que pour déterminer au moins une valeur de mesure qui reproduit l'état d'usure de l'outil (30), ou du doigt d'avance (58), il est prévu un corps palpeur commun (70), susceptible d'être déplacé depuis une position de repos en retrait jusque dans une position de mesure au voisinage du point (H) auquel l'axe de pivotement (A) traverse le plan médian (G), et
- la commande est ainsi conçue qu'elle convertit les valeurs de mesure déterminées en signaux pour commander le chariot à pièces (42), ainsi que le chariot à outils (26) et/ou le dispositif d'avance (50).

2. Machine selon la revendication 1,
caractérisée en ce que le corps palpeur (70) présente une première et une deuxième surface de palpage (72, 74), lesquelles sont parallèles au premier et au deuxième plan de référence (B ; C), et parmi lesquelles la première surface de palpage (72) est prévue pour mesurer la distance des dents de coupe (12) vis-à-vis du porte-pièce (44), tandis que la deuxième surface de palpage (74) est prévue pour mesurer une dimension en épaisseur du doigt d'avance (58) et/ou de l'outil (30).

3. Machine selon la revendication 2,
caractérisée en ce que la première et la deuxième surface de palpage (72, 74) forment l'une avec l'autre un angle droit.

4. Machine selon l'une ou l'autre des revendications de et 3,
caractérisée en ce que le corps palpeur (70) présente une troisième surface de palpage (76), qui forme avec la deuxième surface de palpage (74) un angle aigu et qui est prévue pour mesurer une autre dimension en épaisseur et/ou au moins un rayon de l'outil (30).

5. Machine selon la revendication 4,
caractérisée en ce que le corps palpeur (70) présente une quatrième surface de palpage (78), laquelle est agencée à angle droit vis-à-vis de la première, de la deuxième et de la troisième surface de palpage (72, 74, 76).

6. Machine selon l'une des revendications 1 à 5,
caractérisée en ce que le corps palpeur (70) est également réalisé en vue d'ajuster l'outil (30).
